(19)

Europäisches Patentamt
European Patent Office
Office européen des brevets

(11)  **EP 1 647 838 B1**

(12)  # EUROPÄISCHE PATENTSCHRIFT

(45) Veröffentlichungstag und Bekanntmachung des Hinweises auf die Patenterteilung:
**28.04.2010  Patentblatt 2010/17**

(51) Int Cl.:
***G01S 17/32*** *(2006.01)*

(21) Anmeldenummer: **04405638.0**

(22) Anmeldetag: **13.10.2004**

(54) **Verfahren und Messgerät zur Messung eines Absolutdistanzwertes**

Method and apparatus for absolute distance measurement

Méthode et dispositif pour mesurer une distance absolue

(84) Benannte Vertragsstaaten:
**AT BE BG CH CY CZ DE DK EE ES FI FR GB GR HU IE IT LI LU MC NL PL PT RO SE SI SK TR**

(43) Veröffentlichungstag der Anmeldung:
**19.04.2006  Patentblatt 2006/16**

(73) Patentinhaber: **Leica Geosystems AG**
**9435 Heerbrugg (CH)**

(72) Erfinder: **Meier, Dietrich**
**5015 Niedererlinsbach (CH)**

(74) Vertreter: **Frei Patent Attorneys**
**Frei Patentanwaltsbüro AG**
**Postfach 1771**
**8032 Zürich (CH)**

(56) Entgegenhaltungen:
**EP-A- 0 313 518      WO-A-00/63645**
**WO-A-02/084327      DE-C1- 19 542 490**

## Beschreibung

Die Erfindung bezieht sich auf das Gebiet der elektrooptischen Entfernungsmessung. Sie bezieht sich auf ein Verfahren und ein Messgerät zur Messung eines Absolutdistanzwertes gemäss dem Oberbegriff der entsprechenden unabhängigen Patentansprüche.

## STAND DER TECHNIK

Zur hochauflösenden Messung von Distanzen werden Instrumente zur Bestimmung von Relativdistanzen, beispielsweise Laser-Interferometer verwendet. Dabei läuft ein kollimierter Laserstrahl von einem Messgerät zu einem reflektierenden Ziel. Der gesendete Strahl wird dem reflektierten und im Messgerät empfangenen Strahl überlagert. Bei einer Änderung der Distanz wechselt entsprechend der Interferenz der beiden Strahlen die Intensität der überlagerten Strahlen. Solche Intensitätsänderungen werden detektiert und mittels eines Zählers gezählt. Entsprechend einer Anzahl von Intensitätsänderungen und der Wellenlänge des Laserlichtes ergibt sich die Distanzänderung. Ausgehend von einem bekannten Referenzwert, also einer Absolutdistanz in einer Startposition, lässt sich somit auch eine Absolutdistanz von anderen Positionen ermitteln. Zur Messung von Distanzen zu einem bewegten Reflektor respektive Ziel sind Messgeräte als Tracker ausgestaltet, d.h. dass der Laserstrahl mittels eines drehbaren Spiegels automatisch dem Ziel nachgeführt wird. Dabei werden Elevation und Azimuth des Laserstrahls gemessen, so dass die Bestimmung der Position des Zieles in drei Dimensionen möglich ist. Aufgrund des einfachen Messprinzips kann die Position auch bei Geschwindigkeiten des Ziels von beispielsweise bis zu 10 m/s nachgeführt werden.

Ein solches Verfahren zu Bestimmung einer Relativdistanz bedingt, dass der Strahl zwischen Messgerät und Ziel nicht unterbrochen wird. Geschieht dies, so werden keine Distanzänderungen mehr erfasst, und ist die Absolutdistanz zwischen Messgerät und Ziel nicht mehr bekannt. Diese Absolutdistanz muss deshalb mit anderen Mitteln neu bestimmt respektive kalibriert werden. Eine solche Kombination eines Absolutdistanzmesseres mit einem Interferometer ist in der DE 195 42 490 C1 offenbart.

Zur Messung von Absolutdistanzen sind verschiedene Verfahren bekannt, beispielsweise verschiedene Varianten des Fizeau-Verfahrens, wie sie ebenfalls in der genannten DE 195 42 490 C1 beschrieben und zitiert sind. Damit eine solche Distanz als Basiswert für ein Interferometrieverfahren brauchbar ist, muss sie eine ähnliche Genauigkeit der Messung bieten, d.h. beispielsweise im Bereich von Mikrometern, bei einer Messdistanz von bis zu 100 Metern.

Im Gegensatz zur Messung von Relativdistanzen benötigt aber eine Messung von Absolutdistanzen bei solchen Messdistanzen und Genauigkeiten eine bestimmte minimale Messdauer, während welcher sich die Distanz nicht ändern darf. Deshalb kann das Ziel dabei nicht von einer Bedienperson in der Hand gehalten werden, sondern muss vorübergehend zur Kalibrierung in eine ruhende Halterung abgelegt werden. Dies erzwingt eine zeitaufwendige Unterbrechung der Messungen.

WO 02/084327 A2 beschreibt eine Absolutdistanzmessung mittels Laserlicht, mit einem Messlichtpfad und einem Referenzlichtpfad, über welche das Licht alternierend geleitet wird. Der Messlichtpfad führt über die Messstrecke und wird für ein Absolutdistanzmessverfahren verwendet. Der Referenzlichtpfad liegt innerhalb des Messgerätes. Damit wird eine Distanzänderung einer internen Referenzlichtstrecke bestimmt, um Drift und temperaturbedingte Änderungen zu kompensieren.

In WO 00/63645 ist eine indirekte Positionsbestimmung mit Hilfe eines Trackers beschrieben. Dabei ist eine Position eines Referenzpunktes eines Messinstrumentes zu bestimmen, wobei der Referenzpunkt selber nicht vom Tracker aus sichtbar ist. Dazu wird ein Retroreflektor am Messinstrument entlang einer bekannten Bahn bewegt, wobei ihm der Tracker folgt. Aus den gemessenen Positionen des Retroreflektors und aus der bekannten Geometrie des Messinstrumentes lässt sich die Position und Orientierung des Referenzpunktes bestimmen.

## DARSTELLUNG DER ERFINDUNG

Es ist deshalb Aufgabe der Erfindung, ein Verfahren und ein Messgerät zur Messung eines Absolutdistanzwertes der eingangs genannten Art zu schaffen, welche auch bei einem bewegten Ziel eine präzise Bestimmung einer Absolutdistanz erlauben.

Diese Aufgabe lösen ein Verfahren und ein Messgerät zur Messung eines Absolutdistanzwertes mit den Merkmalen der entsprechenden unabhängigen Patentansprüche.

In dem Verfahren werden in einem Distanzmessgerät, welches sowohl Mittel zur Bestimmung einer absoluten Distanz als auch Mittel zur Bestimmung einer relativen Distanz zwischen dem Messgerät und einem Ziel aufweist, Distanzänderungen, die während einer Bestimmung der absoluten Distanz auftreten, mit dem Mittel zur Bestimmung der relativen Distanz erfasst und bei der Bestimmung der absoluten Distanz berücksichtigt.

Dadurch können Änderungen der Distanz, die während der Messdauer der absoluten Distanz auftreten, also insbesondere Bewegungen des Ziels, kompensiert werden. Es ist nicht mehr erforderlich, dass das Ziel unbewegt gehalten wird. Insbesondere kann das Ziel in der Hand einer Bedienperson gehalten werden, so dass keine wesentliche Unterbrechung einer Messfolge erforderlich ist.

In einer bevorzugten Variante der Erfindung ist das Mittel zur Bestimmung der absoluten Distanz zur Ausführung eines iterativen Verfahrens ausgebildet. Das heisst, dass das Verfahren sich schrittweise über mehrere Abtastschritte dem korrekten absoluten Distanzwert nähert. In jedem Abtastschritt wird aus einem Eingabewert ein Ausgabewert ermittelt, welcher vom Eingabewert und von der Distanz abhängig ist. Eine Distanzänderung, die sich zwischen einem ersten Abtastschritt und einem darauffolgenden zweiten Abtastschritt aufgrund einer Bewegung des Ziels und/oder des Messgerätes ergibt, wird mit dem Mittel zur Bestimmung der relativen Distanz erfasst und bei der Bestimmung des Eingabewertes für den zweiten Abtastschritt zur Kompensation der Distanzänderung verwendet.

Damit kann das iterative Verfahren konvergieren, ohne durch Distanzänderungen aus der Bahn geworfen zu werden.

In einer bevorzugten Variante der Erfindung ist das Verfahren zur Messung des absoluten Distanzwertes ein Fizeau-Verfahren. Dabei ist der Eingabewert eine Modulationsfrequenz, die auf einen abgehenden und einen zurückkommenden Lichtstrahl wirkt, und ist der Ausgabewert eine Intensität des zurückkommenden Lichtstrahl nach seiner Modulation.

In einer weiteren bevorzugten Variante der Erfindung ist das Mittel zur Bestimmung der absoluten Distanz zur Bestimmung einer Mehrzahl von Messwerten für die absolute Distanz ausgebildet. Zur Elimination von Messrauschen werden diese Messwerte gefiltert, beispielsweise durch Integration oder durch Mittelwertbildung. Zur Kompensation von Distanzänderungen zwischen den einzelnen Messungen wird gleichzeitig diese Distanzänderung mit dem Mittel zur Bestimmung der relativen Distanz erfasst, und werden die synchronen Werte der Distanzänderung vor der Filterung von den Messwerten subtrahiert.

In weiteren bevorzugten Ausführungsformen der Erfindung wird die Messung der Distanzänderung zur Korrektur von Messungen des Absolutwertes mittels

- einem Phasenmessverfahren mit moduliertem Licht,
- eines "chirped"-Signals, kohärent oder inkohärent, oder
- Absolutwert-Interferometrie verwendet. Auch hier gilt, dass jeweils berechnete Werte, die einer absoluten Distanz entsprechen, um gemessene Werte von zeitlich korrespondierenden Relativdistanzen respektive Distanzänderungen korrigiert werden.

Das Messgerät zur Messung eines Absolutdistanzwertes weist ein Mittel zur Bestimmung einer absoluten Distanz entsprechend der Strecke zwischen dem Messgerät und einem Ziel, und ein Mittel zur Bestimmung einer relativen Distanz entlang respektive in Richtung dieser Strecke auf. Dabei ist das Mittel zur Bestimmung der absoluten Distanz zur Durchführung mehrerer einzelner Messschritte ausgebildet, und weist das Messgerät Mittel zur Berücksichtigung von Distanzänderungen bei der Bestimmung der absoluten Distanz auf.

In einer ersten bevorzugten Ausführungsform weist das Messgerät Mittel zur Ausführung eines iterativen Verfahrens mit mehreren Abtastschritten auf, wobei in jedem Abtastschritt aus einem Eingabewert ein Ausgabewert, welcher vom Eingabewert und von der Distanz abhängig ist, messbar ist. Das Mittel zur Bestimmung der relativen Distanz ist zur Bestimmung einer Distanzänderung, die sich zwischen einem Abtastschritt und einem folgenden Abtastschritt ergibt, ausgebildet ist. Das Messgerät weist ferner auf Mittel zur Kompensation der Distanzänderung bei der Bestimmung des Eingabewertes für den folgenden Abtastschritt.

In einer zweiten bevorzugten Ausführungsform weist das Messgerät auf Mittel zum Messen einer Folge von gemessenen Absolutdistanzwerten, Mittel zum Messen einer Folge von mindestens annähernd zeitgleichen Relativdistanzwerten, sowie Mittel zum Korrigieren jedes der Absolutdistanzwerte um den entsprechenden mindestens annähernd zeitgleichen Relativdistanzwert. Dieses Mittel zum Korrigieren bildet eine Folge von korrigierten Absolutdistanzwerten. Aus dieser Folge von korrigierten Absolutdistanzwerten bestimmt ein Mittel zur Auswertung einen repräsentativen Absolutdistanzwert. Dieser repräsentative Absolutdistanzwert ist beispielsweise ein gewichteter Mittelwert oder ein in anderer Weise durch Filterung erhaltener Wert.

Die oben erwähnten Kompensationsmittel oder Mittel zum Auswertung können als Teil des Mittels zur Bestimmung der absoluten Distanz ausgebildet sein, sie können aber auch als Teil einer Verarbeitungseinheit ausgebildet sein, welche Daten von Absolutdistanzmesser und Relativdistanzmesser miteinander kombiniert. Im ersten Fall weist das Messgerät Mittel zur Übergabe von relativen Distanzwerten an das Mittel zur Bestimmung der absoluten Distanz auf. Die relativen Distanzwerte sind dabei jeweils bezogen auf einen beliebigen Startwert entsprechend einer beliebigen Referenzposition.

In einer weiteren bevorzugten Ausführungsform der Erfindung weist das Messgerät Mittel zum Fokussieren des Messstrahles auf das Ziel auf, wie beispielsweise in der EP 0 313 518 A2 beschrieben. Damit wird es mögliche, sowohl absolute als auch relative Distanzmessungen mit einem nichtkooperativen Ziel durchzuführen. Ein nichtkooperatives Ziel ist ein nicht besonders präpariertes Objekt, oder ein nur mit einfachen Mitteln wie beispielsweise einer Reflexfolie ausgerüstetes Objekt.

## KURZE BESCHREIBUNG DER ZEICHNUNGEN

Im Folgenden wird der Erfindungsgegenstand anhand von bevorzugten Ausführungsbeispielen, welche in den beiliegenden Zeichnungen dargestellt sind, näher erläutert. Es zeigen:

Figur 1   schematisch eine Struktur eines erfindungsgemässen Distanzmessgerätes;

Figur 2   verschiedene bei einem Fizeau-Verfahren vorkommende Grössen; und

Figur 3    bei einem Filterverfahren vorkommende Grössen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## WEGE ZUR AUSFÜHRUNG DER ERFINDUNG

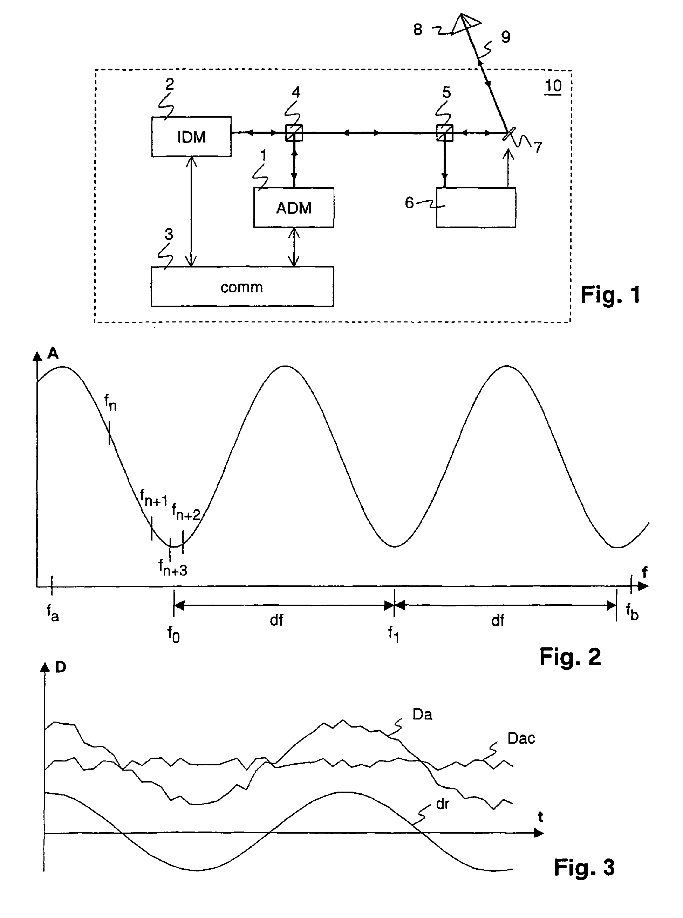

Die Figur 1 zeigt schematisch eine Struktur eines erfindungsgemässen Distanzmessgerätes, mit einer kombinierten Absolutwertmessung gemäss einer bevorzugten Ausführungsform der Erfindung. Ausgehende Lichtstrahlen von einem Absolutdistanzmesser 1 und von einem Relativdistanzmesser 2 werden durch einen ersten Strahlteiler 4 kombiniert, respektive rückkehrendes Licht wird auf diese beiden Distanzmesser 1,2 aufgeteilt. Dazu ist der erste Strahlteiler 4 beispielsweise ein dichroischer Strahlteiler. Eine Kontrolleinheit 3 ist zum Austausch von Daten und Steuersignalen mit sowohl dem Absolutdistanzmesser 1 als auch dem Relativdistanzmesser 2 angeordnet. Die Kontrolleinheit 3 übermittelt Daten vom Relativdistanzmesser 2 an den Absolutdistanzmesser 1, und/oder kombiniert Daten respektive gemessene Distanzwerte, die von diesen beiden Distanzmessern 1,2 stammen, miteinander. Vom ersten Strahlteiler 4 gelangen die Lichtstrahlen über einen zweiten Strahlteiler 5 auf einen um zwei Achsen drehbaren Tracking-Spiegel 7. Ein Tracking-Regler 6 erfasst mit einer positionssensitiven Diode (PSD) einen Teil des rückkehrenden Lichtes und regelt entsprechend dessen Verschiebung die Stellung des Tracking-Spiegels 7, so dass der Lichtstrahl einem reflektierenden Ziel oder Reflektor 8 folgt. Der Reflektor 8 weist beispielsweise ein Dachkantenprisma oder eine Reflektorfolie auf. Die Messstrecke 9 verläuft entlang der ausgestrahlten respektive der reflektierten Lichtstrahlen zwischen einem vorgegebenen Bezugs-Nullpunkt im Messgerät 10 und dem Reflektor 8.

Das Messgerät 10 weist noch weitere elektrische und optische Mittel auf, wie sie aus dem zitierten Stand der Technik bekannt sind, beispielsweise zur Umlenkung und Kollimierung der Lichtstrahlen. Der Einfachheit halber sind diese aber nicht dargestellt. Das Messgerät 10 oder Teile davon sind in einer bevorzugten Ausführungsform der Erfindung in die Stütze eines motorisierten Theodolits oder in eine Messsäule eingebaut. Beim Einbau in eine Theodoliten-Stütze entfällt der Tracking-Spiegel 7.

Der Relativdistanzmesser 2 ist vorzugsweise ein Interferometer. Zur relativen Positionsbestimmung mittels eines Interferometers weist dieses einen Up-Down-Zähler auf, der Momentatwerte der Verschiebung des Reflektors registriert. Bei jeder Bewegung des Zieles in Messrichtung um eine halbe Lichtwellenlänge wird ein Zählerpuls, je nach Verschiebungsrichtung im Zähler addiert oder subtrahiert. Bei beispielsweise einem HeNe-Laser findet dies also alle 0.32 Mikrometer statt. Der Zählerstand kann zu beliebigen Zeiten ausgelesen und gespeichert werden. Aufgrund von zwei unterschiedlichen Zählerständen ist eine Relativbewegung dL zwischen den entsprechenden Auslesezeiten bestimmbar als

$$dL = dM \cdot lambda \cdot \frac{n}{2}$$

wobei
dM = Differenz der Zählerstände,
lambda = Wellenlänge des verwendeten Lichtes,
n = Phasenbrechungsindex des Mediums, üblicherweise Luft.

Damit ist beispielsweise über eine Messdistanz von 0.1 bis 50 m und für Zielgeschwindigkeiten von bis über 10 m/s eine Auflösung von 0.3 bis 2.4 Mikrometern mit einer Genauigkeit von ca. $\pm 0.3$ppm möglich.

Der Absolutdistanzmesser 1 ist vorzugsweise ein Distanzmesser nach dem Fizeau-Prinzip. Der Messlichtstrahl wird beim Fizeausystem durch denselben Modulator zweimal moduliert, einmal als Sendestrahl beim Eintritt in die Messstrecke, und ein zweites Mal als zurückkommender Strahl oder Empfangsstrahl beim Austritt aus der Messstrecke. Bei der Modulation wird beispielsweise eine Polarisation und/oder die Intensität und/oder die Frequenz des Lichts moduliert.

Dabei ergibt sich, dass sich die Lichtintensität nach der zweiten Modulation oder Rückmodulation in Funktion des Reflektorabstandes und der Modulationsfrequenz periodisch verändert: es entstehen beispielsweise beim linearen Ändern der Modulationsfrequenz und bei fixer Distanz abwechselnd Stellen niedriger und Stellen hoher Lichtintensität A am Ausgang der Demodulation, wie in der **Figur 2** dargestellt. Diese Lichtintensität A wird mit einer Photodiode gemessen. Die Minimalstellen der Lichtintensität sind gleichabständig über die Frequenz verteilt, mit einem Frequenzabstand von df = c/2D, wobei c die Lichtgeschwindigkeit und D die zu messende Distanz ist. Mindestens zwei dieser Minimalstellen bei f1 und f0 werden durch Variation der Frequenz f ermittelt. Daraus wird die Distanz mit folgender Formel bestimmt:

$$D = Round\left(\frac{f_0}{|f_0 - f_1|}\right) \cdot \frac{c_0}{2f_0 n_g} + Add$$

wobei die Funktion *Round*() eine Rundung auf eine ganze Zahl vornimmt, und ferner gilt:
D = Absolutdistanz
f0, f1 = Frequenzen von Minima
ng = Gruppenbrechungsindex

c0 = Lichtgeschwindigkeit im Vakuum

Add = Additionskonstante

Für die genaue Bestimmung der Minima wird die Lichtmodulationsfrequenz f vorzugsweise zusätzlich frequenzmoduliert: Beispielsweise wird an einer Grundfrequenz f in einem Band zwischen 2 bis 2.3 GHz eine sinusförmige FrequenzModulation (FM) von 20 kHz mit einem Hub von ca. 500 kHz durchgeführt. Damit wird aus dem detektierten Signal der Photodiode die erste Ableitung gebildet, und an der Minimalstelle des Signals ohne FM-Modulation findet ein Nulldurchgang des FM-modulierten Signals statt. Ein solcher Nulldurchgang ist einfacher als ein Minimum zu detektieren. Die Bestimmung der Amplitude des empfangenen Signals bei einer vorgegebenen Grundfrequenz — mit oder ohne die zusätzliche FM-Modulation — wird Folgenden der Einfachheit halber als Abtastung bezeichnet.

Wie oben erwähnt werden zur Bestimmung, der Absolutdistanz mindestens zwei Minima, d.h. zwei benachbarte Nulldurchgänge des demodulierten Signals benötigt. Die entsprechenden Frequenzen sind dabei f0 und f1. Diese Nullstellen werden durch Variation der Grundfrequenz iterativ bestimmt. Dabei wird bei jedem Schritt eine angepasste Frequenzschrittweite verwendet, die möglichst rasch nahe an den gesuchten Nulldurchgang führt, und wobei die letzten Schritte anhand der maximal gewünschten Auflösung, z.B. 1 ppm, bestimmt werden.

berechnet wird. Dies ergibt eine zeitoptimale Abtastfolge von Frequenzschritten, die zur Nulldurchgangsfrequenz respektive Minumumsfrequenz f0, f1, ... führt.

Damit ist beispielsweise über eine Messdistanz von 1 bis 100 m und für stationäre Ziele eine Auflösung von ca. 1 Mikrometer mit einer Genauigkeit von kleiner als ±25 Mikrometern möglich. Die Messzeit für eine erste Distanzbestimmung dauert beispielsweise 200 Millisekunden, davon ausgehend können anschliessend durch repetitive Messung an einer Nullstelle ca. zehn Werte pro Sekunde ermittelt werden. Verschiedene Vorrichtungen und Verfahren für eine solche Distanzmessung sind in der eingangs erwähnten DE 195 42 490 C1 beschrieben. Dabei ist entweder der Absolut-Distanzmesser im Strahlengang des Interferometers integriert, so dass also beide Messverfahren mit Licht derselben Quelle arbeiten. Oder aber die beiden Messsysteme arbeiten, wie in der **Figur 1** gezeigt, mit unterschiedlichen Lichtwellenlängen. Beispielsweise verwendet dabei das Interferometer einen HeNe-Laser und der Absolutdistanzmesser eine 780 nm Laserdiode.

Die Frequenzschritte werden, indem sie sich dem Nulldurchgang nähern, zunehmend kleiner, was auch immer kleineren Schritten der zu messenden Distanz entspricht. Da diese iterative Annäherung eine gewisse Zeit erfordert, darf sich gemäss dem Stand der Technik die Distanz während dieser Zeit nicht ändern, weil sonst die Iteration an einer völlig falschen Stelle fortfahren würde und die Iteration der Distanzänderung in der Regel gar nicht schnell genug folgen könnte.

Dasselbe Problem stellt sich auch vor und nach der beschriebenen Iteration: Vorher kann beispielsweise eine Grobmessung der Distanz erfolgen, indem mehrere Eingangswerte innerhalb einer vorgegebenen Bandbreite abgetastet werden, wie weiter unten noch beschrieben wird. Nach einer ersten Bestimmung des Minimums wird diese vorzugsweise einige Male wiederholt, um aus den Ergebnissen einen Mittelwert als Nulldurchgangsfrequenz f0, f1 zu bestimmen. Insgesamt werden beispielsweise 20 Abtastungen für die Grobmessung, ca. 20 Abtastungen für die Iteration und 10 Abtastungen für die wiederholte Bestimmung des Minimums benötigt, was bei 1 ms pro Abtastung eine Dauer von 50 ms ergibt.

Deshalb wird gleichzeitig mit den einzelnen Abtastungen, insbesondere während der Iteration, eine Bestimmung der relativen Distanzänderung durchgeführt, beispielsweise mit Hilfe eines interferometrischen Verfahrens. Ein neuer Iterationsschritt wird entsprechend der derart gemessenen Relativbewegung des Ziels zwischen der letzen und der neuen Abtastung korrigiert.

Bei einem neuen Messvorgang wird daher zur Bestimmung der Absolutdistanz zu Beginn der Messung eine Grobmessung der Distanz erfolgen. Dazu wird der Nullstellenabstand $f_0$ - $f_1$ und daraus die Grobdistanz

$$D_0 = \frac{c_0}{2 \cdot |f_0 - f_1| \cdot n_g}$$

bestimmt. Anschliessend wird in der Iteration die Schrittkorrektur jeweils mit diesem Wert normiert. Die Grobmessung kann durch einen "Scan" über die Modulationsbandbreite des Modulators erfolgen, also durch die Bestimmung einer Mehrzahl von Abtastwerten innerhalb der Modulationsbandbreite. Die Modulationsbandbreite beträgt bei einer Grundfrequenz von fa=2GHz bis fb=2.25GHz beispielsweise 250 MHz. Die Distanzverschiebung des Reflektors sollte während dieses Scannens ca. c/(4*f) = 35mm nicht überschreiten (c=Lichtgeschwindigkeit). Dies ist bei einer Gesamtmesszeit von beispielsweise ca. 200 ms für einen von Hand gehaltenen Spiegel normalerweise gewährleistet.

Der Korrekturwert der Frequenz Δf berechnet sich aus der relativen Bewegung Δs zu

$$\Delta f = -\frac{f_0}{D_0} \cdot \Delta s .$$

Zum Beispiel ergibt sich bei $f_0$ = 2GHz, $D_0$ = 10m und $\Delta s$ = 5mm ein Korrekturwert von $\Delta f$ = 1MHz.

Bei der vorgängigen Grobmessung und bei der anschliessenden wiederholten Bestimmung des Minimums wird die Kompensation der Relativbewegungen ebenfalls vorgenommen. Die Bestimmung des Minimums wird für mindestens zwei unterschiedliche Frequenzen f0 und f1 durchgeführt. Da nach dem Vorliegen dieser Werte auch die anschliessende Berechnung der entsprechenden Distanz D eine gewisse Rechenzeit benötigt, wird die Relativposition auch während dieser Rechenzeit weiter verfolgt. Nachdem die Distanz bekannt ist, wird sie um die in der Zwischenzeit aufsummierte aktuelle Distanzänderung korrigiert und ab dann als Referenzwert für den Relativdistanzmesser 2 verwendet. Beispielsweise wird dazu der Zähler im Relativdistanzmesser 2 entsprechend dem Referenzwert gesetzt, oder ein konstanter Offset entsprechend dem Referenzwert wird zur Distanz addiert.

Zusammengefasst kann gesagt werden, dass für die Abtastungen für die verschiedenen Messungen vorzugsweise während der gesamten Messdauer jeweils berechnete Werte, die einer absoluten Distanz entsprechen, um gemessene Werte von zeitlich korrespondierenden Relativdistanzen korrigiert werden.

Damit wird trotz einer Bewegung des Reflektors das Verfahren im Prinzip genau so gut und schnell konvergieren wie ohne Bewegung.

Nach dem Messablauf zur Bestimmung des absoluten Distanzwertes wird dieser der relativen Distanzbestimmung, also z.B. dem Interferometer übergeben. Danach folgt der Distanzwert über den Interferometer-Messwert auch schnellen Bewegungen, beispielsweise mit über 5 m/s.

In einer weiteren bevorzugten Ausführungsform der Erfindung verwendet der Absolutdistanzmesser nach dem Fizeau-Prinzip zwei Lichtwellenlängen, es wird beispielsweise zusätzlich zu der erwähnten 780 nm Laserdiode noch eine Laserdiode mit einer Wellenlänge von beispielsweise unter 450 nm ("blau") verwendet, und deren Licht in den Messstrahl eingekoppelt. Es werden somit zwei Distanzmessungen mit unterschiedlichen Wellenlängen durchgeführt, was eine Kompensation respektive Elimination des Brechungsindexes der Luft ermöglicht.

In einer anderen bevorzugten Ausführungsform der Erfindung wird zur Bestimmung der absoluten Entfernung eine Laufzeitmessung durchgeführt. Um die Werte mehrerer Laufzeitmessungen zur Kompensation von Messungenauigkeiten zusammenzufassen, beispielsweise durch Mittelwertbildung, werden diese Werte nach Massgabe der Relativbewegung korrigiert. **Figur 3** zeigt beispielhaft eine Folge von Messwerten Da einer Absolutdistanzerfassung, eine Folge einer gleichzeitig erfassten Relativposition dr, und eine aus der Differenz Da-dr resultierende korrigierte Folge von Absolutdistanzen Dac. Dabei werden als Korrekturwerte dr jeweils relative Positionswerte verwendet, die einer Position des Zieles im Moment der Reflexion des Messlichtes zumindest annähernd entsprechen.

Ganz allgemein ist das Verfahren in analoger Weise zur Elimination von Rauschen in einer Folge von Absolutwerten durch Mittelwertbildung respektive Integration anwendbar.

In weiteren bevorzugten Ausführungsformen der Erfindung wird die Messung der Distanzänderung zur Korrektur bei der Messung des Absolutwertes mittels

- Phasenmessverfahren mit moduliertem Licht,
- eines "chirped"-Signals, kohärent oder inkohärent, oder
- Absolutwert-Interferometrie

durchgeführt. Gemeinsam ist in allen Fällen, dass die Änderung der Distanz während der Integrationszeitdauer im Messablauf erfasst und kompensiert wird.

## Bezugszeichenliste

| 1 | Absolutdistanzmesser |
|---|---|
| 2 | Relativdistanzmesser |
| 3 | Kontrolleinheit |
| 4 | erster Strahlteiler |
| 5 | zweiter Strahlteiler |
| 6 | Tracking-Regler |
| 7 | Tracking-Spiegel |
| 8 | Reflektor |
| 9 | Strecke |
| 10 | Messgerät |

## Patentansprüche

1. Verfahren zur Messung eines Absolutdistanzwertes entsprechend einer Strecke (9) zwischen einem Messgerät (10) und einem Ziel (8), wobei mit einem Absolutdistanzmesser (1) zur Messung des Absolutdistanzwertes mehrere einzelne Messschritte durchgeführt werden, **dadurch gekennzeichnet, dass** mindestens annähernd gleichzeitig mit diesen einzelnen Messschritten jeweils mit einem Relativdistanzmesser (2) auch eine Distanzänderung zwischen dem Messgerät (10) und dem Ziel (8) als Momentanwert der Verschiebung des Ziels (8) gemessen wird und diese Distanzänderung zur Bestimmung der absoluten Distanz berücksichtigt wird indem der Absolutdistanzmesser (1) iterativ über mehrere Abtastschritte zum Absolutdistanzwert gelangt, und Distanzänderungen zwischen dem Messgerät (10) und dem Ziel (8), welche zwischen zwei Abtastschritten auftreten, mit dem Relativdistanzmesser (2) erfasst und bei der Bestimmung der absoluten Distanz durch den Absolutdistanzmessers (1), im späteren der zwei Abtastschritte berücksichtigt werden.

2. Verfahren gemäss Anspruch 1, **dadurch gekennzeichnet, dass** zur Messung des absoluten Distanzwertes ein iteratives Verfahren mit mehreren Abtastschritten verwendet wird, wobei in jedem Abtastschritt aus einem Eingabewert ($f_n$, $f_{n+1}$, $f_{n+2}$, ...), wel-

cher eine Modulationsfrequenz ist, die auf einen abgehenden und einen zurückkommenden Lichtstrahl wirkt, ein Ausgabewert (A), welcher eine Intensität (A) des modulierten zurückkommenden Lichtstrahls ist, erzeugt und gemessen wird, welcher vom Eingabewert ($f_n$, $f_{n+1}$, $f_{n+2}$, ...) und von der Distanz abhängig ist, und wobei jeweils eine Distanzänderung, die sich zwischen einem Abtastschritt und einem folgenden Abtastschritt ergibt, gemessen wird und bei der Bestimmung des Eingabewertes ($f_{n+1}$, $f_{n+2}$, $f_{n+3}$, ...) für den folgenden Abtastschritt zur Kompensation der Distanzänderung verwendet wird.

3. Verfahren gemäss Anspruch 1 oder 2, **dadurch gekennzeichnet, dass** die gemäss dem iterativen Verfahren theoretisch ermittelte Frequenz $f_{ntheor}$ eines Iterationsschrittes nach Massgabe einer gemessenen Distanzänderung $\Delta s$ in der folgenden Weise zur Bestimmung einer effektiv verwendeten Frequenz $f_n$ korrigiert wird

$$ f_n = f_{ntheor} + \Delta f $$

wobei

$$ \Delta f = -\frac{f_0}{D_0} \cdot \Delta s $$

und $f_0$ die Messfrequenz respektive Grund-Modulationsfrequenz und $D_0$ eine Grobdistanz, also eine vorläufige Annäherung an die zu messende Distanz ist.

4. Verfahren gemäss Anspruch 1, **dadurch gekennzeichnet, dass** es die folgenden Schritte aufweist:

   ■ Messen einer Folge von gemessenen Absolutdistanzwerten,
   ■ Messen einer Folge von mindestens annähernd zeitgleichen Relativdistanzwerten,
   ■ Korrigieren jedes der Absolutdistanzwerte um den entsprechenden mindestens annähernd zeitgleichen Relativdistanzwert zur Bildung einer Folge von korrigierten Absolutdistanzwerten, und
   ■ Auswertung der Folge von korrigierten Absolutdistanzwerten zur Bestimmung eines repräsentativen Absolutdistanzwertes.

5. Verfahren gemäss Anspruch 4, **dadurch gekennzeichnet, dass** die Auswertung eine Mittelwertbildung, eine Integration oder eine andere Art der Filterung umfasst.

6. Messgerät (10) zur Messung eines Absolutdistanzwertes, aufweisend einen Absolutdistanzmesser (1) zur Bestimmung einer absoluten Distanz entsprechend einer Strecke (9) zwischen dem Messgerät (10) und einem Ziel (8), **dadurch gekennzeichnet, dass** das Messgerät (10) einen Relativdistanzmesser (2) zur Bestimmung einer Distanzänderung zwischen dem Messgerät (10) und dem Ziel (8) als Momentanwert der Verschiebung des Ziels (8) aufweist, der Absolutdistanzmesser (1) zur iterativen Bildung des Absolutdistanzwertes über mehrere Abtastschritte ausgebildet ist, und das Messgerät (10) aufweist Mittel zur Berücksichtigung der durch den Relativdistanzmesser (2) ermittelten Distanzänderungen zwischen dem Messgerät (10) und dem Ziel (8), welche zwischen zwei Abtastschritten auftreten, bei der Bestimmung der absoluten Distanz durch den Absolutdistanzmesser (1) im späteren der zwei Abtastschritte.

7. Messgerät (10) gemäss Anspruch 6, **dadurch gekennzeichnet, dass** es aufweist Mittel (1) zur Ausführung eines iterativen Fizeau-Verfahrens mit mehreren Abtastschritten, wobei in jedem Abtastschritt aus einem Eingabewert, welcher eine Modulationsfrequenz ist, die auf einen abgehenden und einen zurückkommenden Lichtstrahl wirkt, ein Ausgabewert, welcher eine Intensität (A) des modulierten zurückkommenden Lichtstrahls ist und welcher vom Eingabewert und von der Distanz abhängig ist, messbar ist, und wobei das Mittel (2) zur Bestimmung der relativen Distanz zur Bestimmung einer Distanzänderung, die sich zwischen einem Abtastschritt und einem folgenden Abtastschritt ergibt, ausgebildet ist, und das Messgerät (10) aufweist Mittel zur Kompensation der Distanzänderung bei der Bestimmung des Eingabewertes für den folgenden Abtastschritt.

8. Messgerät (10) gemäss Anspruch 6, **dadurch gekennzeichnet, dass** es aufweist Mittel (1) zum Messen einer Folge von gemessenen Absolutdistanzwerten, Mittel (2) zum Messen einer Folge von mindestens annähernd zeitgleichen Relativdistanzwerten, Mittel zum Korrigieren jedes der Absolutdistanzwerte um den entsprechenden mindestens annähernd zeitgleichen Relativdistanzwert zur Bildung einer Folge von korrigierten Absolutdistanzwerten, und Mittel zum Auswertung der Folge von korrigierten Absolutdistanzwerten zur Bestimmung eines repräsentativen Absolutdistanzwertes.

9. Messgerät (10) gemäss einem der Ansprüche 6 bis 8, **dadurch gekennzeichnet, dass** es aufweist Mittel zur Übergabe von relativen Distanzwerten an das Mittel (1) zur Bestimmung der absoluten Distanz.

**Claims**

1. Method for measuring an absolute distance corresponding with a range (9) between a measuring device (10) and a target (8), wherein several individual measuring steps are executed by means of an absolute distance meter (1) for measuring the absolute distance, **characterized in that** at least approximately simultaneously with these individual measuring steps, a distance variation between the measuring device (10) and the target (8) is measured as a transient value of the target displacement by means of a relative distance meter (2) and said distance variation is taken into account during the determination of the absolute distance, by the absolute distance meter (1) arriving at the absolute distance value iteratively through several sampling steps, and distance variations between the measuring device (10) and the target (8) arising between two sampling steps being detected by the relative distance meter (2) and incorporated in the determination of the absolute distance meter (1) in the later of the two sampling steps.

2. Method according to claim 1, **characterized in that** an iterative method of several sampling steps is applied for measuring the absolute distance value, wherein during each sampling step an output value (A), being an intensity (A) of the modulated returning ray and dependent on the input value ($f_n$, $f_{n+1}$, $f_{n+2}$, ...) and on the distance, is generated and measured from an input value ($f_n$, $f_{n+1}$, $f_{n+2}$, ...), being a modulation frequency acting upon a departing and a returning ray, and wherein each distance variation occurring between one sampling step and the next is measured and used for the compensation of the distance variation during determination of the input value ($f_{n+1}$, $f_{n+2}$, $f_{n+3}$, ...) for the following sampling step.

3. Method according to any one of claims 1 or 2, **characterized in that** the frequency $f_{ntheor}$ of an iteration step, determined theoretically according to the iterative method, is corrected according to a measured distance variation $\Delta s$ in the following manner in order to determine an actually used frequency $f_n$

$$f_n = f_{ntheor} + \Delta f$$

wherein

$$\Delta f = -\frac{f_0}{D_0} \cdot \Delta s$$

and $f_0$ is the measuring frequency or basic modulation frequency and $D_0$ is a rough distance, i.e. a temporary approximation to the distance to be measured.

4. Method according to claim 1, **characterized in that** it comprises the following steps:

   ■ measuring a sequence of absolute distance values,
   ■ measuring a sequence of at least approximately simultaneous relative distance values,
   ■ correcting each one of the absolute distance values by the corresponding, at least approximately simultaneous relative distance value in order to form a sequence of corrected absolute distance values, and
   ■ evaluating the sequence of corrected absolute distance values in order to determine a representative absolute distance.

5. Method according to claim 4, **characterized in that** the evaluation involves averaging, integration or another kind of filtering.

6. Measuring device (10) for measuring an absolute distance, comprising an absolute distance meter (1) for the determination of an absolute distance corresponding to a range (9) between the measuring device (10) and a target (8), **characterized in that** the measuring device (10) comprises a relative distance meter (2) for the determination of a distance variation between the measuring device (10) and a target (8) as a transient value of the target's displacement, that the absolute distance meter (1) is designed to generate the absolute distance value iteratively across a number of individual measuring steps, and that the measuring device (10) comprises means to take into account the distance variations between the measuring device (10) and the target (8), arising between two sampling steps and detected by the relative distance meter (2), during the determination of the absolute distance by the absolute distance meter (1) in the later of the two sampling steps.

7. Measuring device (10) according to claim 6, **characterized in that** it comprises means (1) to execute an iterative Fizeau method of a number of sampling steps, wherein during each sampling step an output value (A), being an intensity (A) of the modulated returning ray that is dependent on the input value and on the distance, can be measured from an input value, being a modulation frequency acting upon a departing and a returning ray, and wherein the means (2) to determine the relative distance is designed to determine a distance variation occurring between one sampling step and the next, and the measuring device (10) comprises means to compensate the distance variation during the determination of the input value for the following sampling step.

8. Measuring device (10) according to claim 6, **characterized in that** it comprises means (1) to measure a sequence of absolute distance values, means (2) to measure a sequence of at least approximately simultaneous relative distance values, means to correct each absolute distance value by the corresponding, at least approximately simultaneous relative distance value in order to form a sequence of corrected absolute distance values, and means to evaluate the sequence of corrected absolute distance values in order to determine a representative absolute distance value.

9. Measuring device (10) according to any one of claims 6 to 8, **characterized in that** it comprises means to transmit relative distance values to the means (1) to determine the absolute distance.


**Revendications**

1. Procédé de mesure d'une valeur de distance absolue qui correspond au parcours (9) entre un appareil de mesure (10) et une cible (8), plusieurs étapes séparées de mesure étant exécutées à l'aide d'un dispositif (1) de mesure de distance absolue qui mesure la valeur de la distance absolue,
**caractérisé en ce que**

au moins approximativement en même temps que chacune de ces différentes étapes de mesure, une modification de distance entre l'appareil de mesure (10) et la cible (8) qui constitue la valeur instantanée du déplacement de la cible (8) est mesurée à l'aide d'un dispositif (2) de distance relative,
**en ce que** cette modification de distance est prise en compte pour déterminer la distance absolue par le fait que le dispositif (1) de mesure de distance absolue aboutit itérativement par plusieurs étapes de palpage à la valeur de la distance absolue et
**en ce que** des modifications de distance entre l'appareil de mesure (10) et la cible (8) qui surviennent entre deux étapes de palpage sont détectées par le dispositif (2) de mesure de distance relative et sont prises en compte dans la deuxième des étapes de palpage lors de la détermination de la distance absolue par le dispositif (1) de mesure de distance absolue.

2. Procédé selon la revendication 1, **caractérisé en ce que** pour mesurer la valeur de distance absolue, il utilise un procédé itératif constitué de plusieurs étapes de palpage, **en ce qu'**une valeur de sortie (A) qui est l'intensité (A) du faisceau lumineux modulé de retour est formée et mesurée dans chaque étape de palpage à partir d'une valeur d'introduction ($f_n$, $f_{n+1}$, $f_{n+2}$, ...) qui est une fréquence de modulation qui agit sur un faisceau lumineux émis et en retour, **en ce que** la valeur de sortie dépend de la valeur d'entrée ($f_n$, $f_{n+1}$, $f_{n+2}$, ...) et de la distance et **en ce qu'**une modification de distance qui survient entre une étape de palpage et une étape suivante de palpage est mesurée et est utilisée pour compenser la modification de distance lors de la détermination de la valeur d'entrée ($f_{n+1}$, $f_{n+2}$, $f_{n+3}$, ...) de l'étape de palpage suivante.

3. Procédé selon les revendications 1 ou 2, **caractérisé en ce que** pour déterminer une fréquence $f_n$ effectivement utilisée, la fréquence $f_{ntheor}$ déterminée théoriquement par le procédé itératif pour une étape d'itération est corrigée de la manière suivante en fonction de la modification mesurée $\Delta s$ de la distance :

$$f_n = f_{ntheor} + \Delta f$$

dans laquelle

$$\Delta f = -f_0/D_0 . \Delta s$$

et $f_0$ représente la fréquence de mesure ou la fréquence de modulation de base et $D_0$ une distance grossière et donc une approximation provisoire de la distance à mesurer.

4. Procédé selon la revendication 1, **caractérisé en ce qu'**il présente les étapes suivantes :

- mesure d'une succession de valeurs de distance absolue,
- mesure d'une succession de valeurs de distance relative au moins approximativement simultanées,
- correction de chacune des valeurs de distance absolue par la valeur de distance relative au moins approximativement simultanée qui y correspond, pour former une succession de valeurs corrigées de la distance absolue et
- évaluation de la succession des valeurs corrigées de distance absolue pour déterminer une valeur représentative de la distance absolue.

5. Procédé selon la revendication 4, **caractérisé en ce que** l'évaluation comprend la formation d'une valeur moyenne, une intégration ou un autre type de filtrage.

**6.** Appareil (10) de mesure d'une valeur de distance absolue, présentant un dispositif (1) de mesure de distance absolue qui détermine la distance absolue qui correspond au parcours (9) entre l'appareil de mesure (10) et une cible (8), **caractérisé en ce que**

l'appareil de mesure (10) présente un dispositif (2) de mesure de distance relative qui détermine la modification de distance entre l'appareil de mesure (10) et la cible (8) en tant que valeur instantanée du déplacement de la cible (8), **en ce que** le dispositif (1) de distance absolue est configuré pour former itérativement la valeur de distance absolue par plusieurs étapes de palpage,

**en ce que** pour la détermination de la distance absolue par le dispositif (1) de mesure de distance absolue au cours de la deuxième des deux étapes de palpage, l'appareil de mesure (10) présente des moyens qui tiennent compte des modifications de distance déterminées par le dispositif (2) de distance relative entre l'appareil de mesure (10) et la cible (8) qui surviennent entre deux étapes de palpage.

**7.** Appareil de mesure (10) selon la revendication 6, **caractérisé en ce qu'**il présente des moyens (1) d'exécution d'un procédé itératif de Fizeau par plusieurs étapes de palpage, **en ce que** lors de chaque étape de palpage, une valeur de sortie qui est l'intensité (A) du faisceau lumineux modulé de retour et qui dépend de la valeur d'entrée et de la distance peut être mesurée à partir d'une valeur d'introduction ($f_n$, $f_{n+1}$, $f_{n+2}$, ...) qui est une fréquence de modulation qui agit sur un faisceau lumineux émis et sur un faisceau lumineux en retour, **en ce que** les moyens (2) de détermination de la distance relative sont configurés pour déterminer la modification de distance qui s'établit entre une étape de palpage et l'étape de palpage suivante et **en ce que** l'appareil de mesure (10) présente des moyens qui, lors de la détermination de la valeur d'entrée, compensent la modification de distance en vue de l'étape suivante de palpage.

**8.** Appareil de mesure (10) selon la revendication 6, **caractérisé en ce qu'**il présente des moyens (1) de mesure d'une succession de valeurs mesurées de distance absolue, des moyens (2) de mesure d'une succession de valeurs au moins approximativement simultanées de distance relative, des moyens de correction de chacune des valeurs de distance absolue par les valeurs au moins approximativement simultanées de distance relative correspondantes pour former une succession de valeurs corrigées de distance absolue, et des moyens d'évaluation de la succession de valeurs corrigées de distance absolue pour déterminer une valeur représentative de la distance absolue.

**9.** Appareil de mesure (10) selon l'une des revendications 6 à 8, **caractérisé en ce qu'**il présente des moyens de transmission des valeurs de distance relative aux moyens (1) de détermination de la distance absolue.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19542490 C1
- WO 02084327 A2
- WO 0063645 A
- EP 0313518 A2